# EUROPEAN PATENT APPLICATION

(11) **EP 3 462 161 A1**
(43) Date of publication of application: **03.04.2019**
(21) Application number: 18204728.2
(22) Date of filing: 27.01.2014
(51) Int. Cl.: G01N 17/04, B65D 90/10, E02B 17/00

(54) **APPARATUS AND METHOD FOR PROTECTING A STRUCTURAL MEMBER AND CORRESPONDING INSPECTION PORT**

(30) Priority: 07.03.2013 GB 201304120
(62) Divisional of application: 14701615.8
(71) Applicant: Winn&Coales (Denso) Limited, London, Greater London SE27 0TR (GB)
(72) Inventor: PEARCE, Steven, Findon Village, West Sussex BN14 0UE (GB); TONKS, Adrian, London, SE19 2LT (GB); CRAWLEY, Steven, Ashford, Kent TN23 5LH (GB); LEHRI, Muhammed, West Ealing, Greater London W13 9HT (GB); THOMSON, John, London, SE5 8LH (GB)
(74) Representative: Boult Wade Tennant LLP

(57) **Abstract**

The invention relates to a method of, and apparatus for, protecting structural members from corrosion. Corrosion protection systems are commonly used to protect structural members, such as piles, jetties or petroleum platforms, from corrosion in aquatic environments. Aquatic environments include the marine, limnal, estuarine, paludal and riverine environments. A method of protecting a structural member from corrosion, comprising: covering at least a portion of the structural member with a protective layer (50) for protecting the structural member from corrosion whilst leaving a gap (52) in the protective layer, the gap (52) being surrounded by the protective layer; and providing a cover assembly (5) which includes a cover body (40) having an aperture and a closure member (10) arranged to interfit with the aperture; mounting the assembly over the gap (52) and at least a section of the protective layer (50) adjacent the gap (52); sealing the gap (52) by interfitting the closure member (10) in the aperture to prevent ingress of fluid through the aperture to the structural member; and allowing inspection of the structural member by removing the closure member (10) from the aperture to provide access to the structural member via the aperture and via the opening in the protective layer. The cover assembly (5) allows therefore to close the gap (52) which forms an inspection port.

## Description

### FIELD OF INVENTION

The invention relates to a method of, and apparatus for, protecting structural members from corrosion.

Corrosion protection systems are commonly used to protect structural members from corrosion in aquatic environments. Aquatic environments include the marine, limnal, estuarine, paludal and riverine environments.

### BACKGROUND OF THE INVENTION

Structures, such as piers, mooring dolphins, berthing dolphins, jetties and platforms are typically constructed using structural members. The form of the Structural members is varied and includes, but is not limited to, tubular, cylindrical and hexagonal prism forms. Such Structural members can be constructed in wood, steel, cast iron or concrete. Under conditions of saltwater or freshwater immersion, or exposure, the member can be protected against corrosion by the application of a corrosion protection system. The use of a protective coating system is particularly common where the structural members form the structural support for a superstructure for example, the piles supporting a pier. A protective coating system can be used to protect the entire surface of a structural member. Alternatively, a protective coating system can be used to protect a portion of the surface of a structural member. The practise of protecting only a portion of the surface of a structural member is particularly relevant when corrosion is localised to a particular section of the structural member, for example near the waterline or within the splash zone. Some examples of these protective coating systems can be seen at SeaShield.com. These systems comprise an inner corrosion protection layer and an outer mechanically protective layer. The inner corrosion protection layer comprises chemical substances or preparations impregnated onto and into a fabric or cloth to form a tape. Such materials are well known in the art. Such material can be conveniently applied in roll form to the surface of the structural member in a single continuous or substantially continuous process. In contrast, the mechanically protective layer is in a sheet form and is conveniently installed in a modular manner. Depending on the protected length, installation can be achieved either as a single module or as a plurality of modules. Where a plurality of modules is required these are positioned contiguously along the structural member. Adjacent modules abut or more preferably overlap to form a continuous assembly. The modules are typically of a standardised length. The length of the module is defined as the dimension parallel with the major axis of the structural member. This outer layer prevents the ingress of nutrient rich water that could support microbiological organisms that could in turn support Microbiologically Induced Corrosion. Prevention of ingress of water is conveniently achieved by ensuring that components of the corrosion protection system are manufactured from components that are waterproof or substantially waterproof. Prevention of ingress of water is further achieved by ensuring that the outer layer is under circumferential stress and impinges radially on the inner layer, thereby excluding any possible route for water ingress. The circumferential stress is imparted by installing the module whilst under strain and the stress is maintained by the use of suitable fixing applied to the terminal ends of the module. Such modular mechanically protective layers are well known in the art. While this arrangement is very effective it is occasionally necessary for asset owners to inspect the surface of the structural member or inner corrosion protection layer. Such inspections are used to confirm that no water ingress has occurred and that Microbially Induced Corrosion and/or other forms of corrosion are not present. This inspection normally entails the destructive removal of the outer mechanical protection layer and the inner corrosion protection layer. The underlying surface of the structural member can then be exposed to allow inspection. This method, while effective, is time consuming, and can necessitate replacement of inner corrosion protection layer and outer mechanically protective layer damaged during removal. Furthermore, by removing the entire system, the surface is exposed to microbiological contamination from the environment. Such contamination negates the effectiveness of any subsequent microbiological sampling and investigation.

The outer mechanically protective layer can be adapted to facilitate inspection for example by reducing the overall length of one or more of the modules to facilitate convenient removal and reduce the cost of the replacement module. Notwithstanding such adaptation, the following problems remain. Several persons are still required to remove the reduced-length module. Encrusted marine growth at the junction between adjacent modules can hinder removal. The length of the reduced-length module cannot be made arbitrarily small, the minimum length being determined by the tools and fittings available for installation.

Furthermore, modules of mixed length are generally more inconvenient to place and install. Retro-fitting of reduced length modules within an existing contiguous assembly of standard length modules is highly inconvenient because the reduced length modules does not span the full distance between adjacent modules and additional measures must be taken to make good the unprotected portion. If modules are installed relative to a fixed datum, for example the soffit of the superstructure, the adjacent modules may require substantial modification or judicious placement to ensure that the reduced length module is positioned at the required location. Therefore there exists a need for an improved method.

### SUMMARY OF THE INVENTION

Accordingly, the present invention can provide a method of inspecting the condition of the member without the need for destructive removal of protective layers such as the corrosion prevention layer and the mechanical protection layer.

Such methods may involve providing a hole in the mechanical protection layer around which a boss is fitted and into which a plug is inserted in order to seal the hole in the mechanical protection layer.

The boss may be constructed from the same material as the mechanical protection layer. It may also be tubular in cross-section when viewed from an angle perpendicular to the major axis of the mechanical protection layer. It may also be contoured to the structure it is to protect, to ensure an even stress distribution.

The plug may be held in place using one of the two exemplary methods described below.

Method A utilizes a female thread which is fitted into the boss. This may be sealed against the boss using a gasket. It is held in place using a fixing method suitable for the marine environment. The plug has a male thread corresponding to the female thread.

An O-ring seal may be incorporated into the outer edge of the female thread in order to provide the seal that is required of the plug.

A suitable deformable anti-corrosion material may be inserted under the screw in plug to ensure that the anti-corrosion tape is held against the surface of the member when the plug is in place.

Method B utilises a barrel of a hinge built into the boss. The plug is then made to have the complementary barrel of the hinge so that both parts may be pivotably connected together using a pin, rivet, or nut and bolt as a pivot.

This hinge may be mirrored on the opposite side of the frame and plug so that the plug can be secured within the boss and cannot be removed without first removing one of the pins, rivets, or nuts and bolts.

The boss and the plug may both be manufactured so as to have tapered edges that meet to create a seal.

For either Method A or Method B the boss may be attached to the mechanical protection layer using a bonding method suited to the material that the mechanical protection layers is constructed from, for example if the mechanical protection layer is HDPE then plastic welding could be used to bond the boss, if also made from HDPE, to the said layer. Alternatively however straps, adhesive tape, glue or other methods can be used to bond the boss to the outer mechanical protection layer.

The underside of the frame may be shaped so as to fit the curvature of the structural member or it may be left flat depending on the shape of the structural member. This shaping will be carried out at the manufacture stage before the frame is bonded to the mechanical protection layer.

Such inspection ports as provided by Method A or Method B can be accessed above the waterline for inspection of Microbiologically Induced Corrosion. Inspection port Method A and Method B can also be accessed below the waterline for other types of inspection such as wall thickness. Access to inspection port Method A and Method B are designed to be easy to use for both submerged divers as well as contractors.

Embodiments of the invention can minimise the contamination of the structure by minimising the exposure of the structure to the surrounding environment.

Embodiments of the invention provides a means of inspecting the structure that is non-destructive to the protection system.

Embodiments of the invention can be reusable for the lifespan of the protection system.

Embodiments of the invention can be located in a fixed point which will give a fixed datum point for repeat inspections, such as year on year wall thickness loss.

Embodiments of the invention can be retrofitted to an existing structure.

### BRIEF DESCRIPTION OF THE FIGURES

Figure 1 shows an exploded view of a first embodiment.
Figure 2 shows an exploded view of a second embodiment.

### DETAILED DESCRIPTION

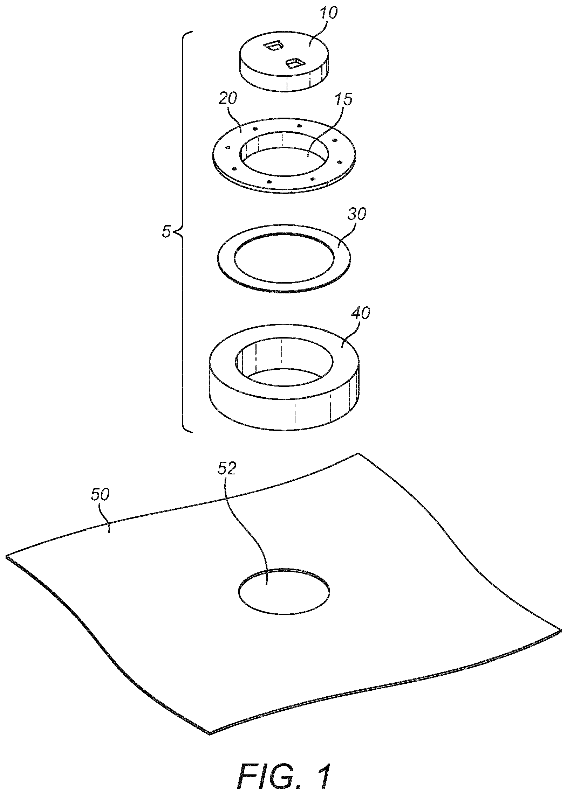

Figure 1 shows an exploded view of a first embodiment of a system for protecting a structural member from corrosion.

The system comprises a protective layer 50. The protective layer 50 is formed on the surface of a structural member.

The protective layer preferably comprises a corrosion protection layer formed on the structural member and a mechanical protection layer formed on the corrosion protection layer.

The protective layer 50 has formed therein an opening 52.

A cover assembly 5 is provided to prevent the structural member from being exposed to corrosion via the opening 52.

The cover assembly 5 is mounted on the protective layer. The cover assembly 5 surrounds the opening 52.

Preferably, the cover assembly 5 comprises a cover body 40 mounted to the protective layer.

The cover body 40 may comprise the same material as the protective layer 5. Preferably, the cover body 40 may comprise the same material as the mechanical protection layer.

Preferably, the cover assembly 5 comprises an aperture 15 and an interfitting closure member 10 arranged to interfit with the aperture 15.

The interfitting closure member 10 and the aperture 15 may have complementary tapered outer surfaces (i.e. narrowing towards the structural member).

The interfitting closure member 10 may have a male screw thread formed on its outer surface and the aperture 15 may have a corresponding female screw thread on its inner surface. Accordingly, the screw threads may mesh in order to engage the member 10 to close the aperture 15.

Preferably, the body 40 comprises a flanged cylinder 20. The female thread may be provided on the cylindrical portion of the flanged cylinder 20. The cylindrical portion of the flanged cylinder 20 is arranged to slide into a hole through the body 40. The flanged portion of the flanged cylinder 20 can be used to mount the flanged cylinder 20 to the body 40 by way of fixing means such as screws.

Preferably, a gasket 30 may be provided between the flanged cylinder 20 and the body 40 to prevent leakage between the flanged cylinder 20 and the body 40.

A handle, or finger holes may be provided on the outer surface of the interfitting closure member 10 to aid removal thereof from the aperture 15.

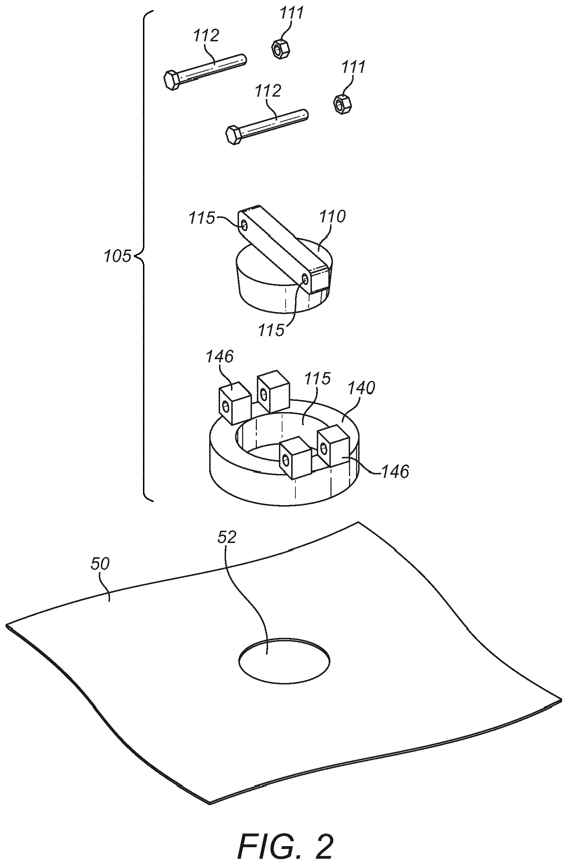

Figure 2 shows an exploded view of a second embodiment of a system for protecting a structural member from corrosion.

In common with the first embodiment, the protective layer 50 is provided, along with an aperture.

However, in this embodiment a cover assembly 105 is provided with a different construction.

The cover assembly 105 is mounted on the protective layer, surrounding the opening 52.

Preferably, the cover assembly 105 comprises a body 140 mounted to the protective layer.

Preferably, the body 140 may comprise the same material as the mechanical protection layer.

Preferably, the cover assembly 105 comprises an aperture 115 and an interfitting closure member 110 arranged to interfit with the aperture 115.

The interfitting closure member 110 and the aperture 115 may have complementary tapered outer surfaces (i.e. narrowing towards the structural member).

The interfitting closure member 110 may be a simple plug that interfits with the aperture 115. The interfitting closure member 110 may be mounted using a hinge. This can aid the engagement of the interfitting closure member 110 with the aperture 115 by ensuring alignment of the two parts.

Preferably, the hinge comprises at least one barrel on the interfitting closure member 110 and at least one barrel on the body 140. The barrels may be rotatably connected using one or more bolts 111, 112, rivets or pins.

A handle, or finger holes may be provided on the outer surface of the interfitting closure member 110 to aid removal thereof from the aperture 115.

In either of the first or second embodiments, removable corrosion-resistant tape may be used to cover the opening 52 within the cover assembly 5, 105. A compressible material can optionally be provided to fill any space between the interfitting closure member 10, 110 and the structural assembly, and to hold the tape in place.

In either of the first or second embodiments, the body has a maximum dimension of less than 300 mm.

### EXAMPLE

Petrolatum tape is used for the corrosion prevention layer of the corrosion protection system and is well known in the art. The outer mechanical protection layer would be made from High Density Polyethylene (HDPE) and is well known in the art. The boss would also be made from HDPE. This would allow the boss to be fitted to the outer mechanical protection layer by means of plastic welding. Once the boss is fitted to the outer mechanical protection layer the female thread can be fitted to the boss. This is done using fasteners suitable for the marine environment, usually A4 316 Stainless Steel Screws. It is ensured that the gasket seal is in place before the thread is fixed to the boss. This gasket does not use fixings of its own but is held in place by the fixings used to secure the thread to the boss. The preferred diameter of the opening is 100mm. The preferred height of the boss is 30mm. This ratio of height to diameter provides a conveniently sized aperture for inspection and a sheltered or substantially sheltered aperture to prevent contamination during inspection.

The use of petrolatum tape as the corrosion prevention layer allows for inspection by means of cutting the petrolatum tape in order to expose the surface of the structure. This area can be repaired by replacing the cut back area of tape and applying petrolatum paste to the cuts in the tape. When the void within the inspection port if filled with petrolatum mastic the area is protected to the same level as before the petrolatum tape was cut.

## Claims

1. A method of protecting a structural member from corrosion, comprising:
covering at least a portion of the structural member with a protective layer for protecting the structural member from corrosion whilst leaving a gap in the protective layer, the gap being surrounded by the protective layer; and
providing a cover assembly which includes a cover body having an aperture and a closure member arranged to interfit with the aperture;
mounting the assembly over the gap and at least a section of the protective layer adjacent the gap;
sealing the gap by interfitting the closure member in the aperture to prevent ingress of fluid through the aperture to the structural member; and
allowing inspection of the structural member by removing the closure member from the aperture to provide access to the structural member via the aperture and via the opening in the protective layer.

2. A method of protecting a structural member having a protective layer for protecting the structural member from corrosion covering at least a portion thereof, comprising:
forming a gap in the protective layer, the gap being surrounded by the protective layer;
providing a cover assembly which includes a cover body having an aperture and a closure member arranged to interfit with the aperture;
mounting the assembly over the gap and at least a section of the protective layer adjacent the gap;
sealing the gap by interfitting the closure member in the aperture to prevent ingress of fluid through the aperture to the structural member; and
allowing inspection of the structural member by removing the closure member from the aperture to provide access to the structural member via the aperture and via the opening in the protective layer.

3. The method of claim 1 or claim 2, wherein the interfitting closure member has a male screw thread on an outer surface thereof and the aperture has a female screw thread on the inner surface thereof arranged to mesh with the male screw thread.

4. The method of any preceding claim, wherein the interfitting closure member is mounted on the cover body using a hinge.

5. The method of any preceding claim, wherein the interfitting closure member and the aperture have complementary tapered outer surfaces.

6. The method of any preceding claim, wherein the cover body comprises the same material as the protective layer.

7. The method of any preceding claim, wherein the protective layer comprises a corrosion protection layer formed on the structural member and a mechanical protection layer formed on the corrosion protection layer.

8. The method of any preceding claim, wherein the cover body comprises the same material as the mechanical protection layer.

9. The method of any preceding claim, wherein the structural member is one or more of: a pile for supporting a pier; etc.

10. The method of any preceding claim, wherein the structural member is situated in an aquatic environment.

11. A method of claim 7, wherein the outer mechanical protection layer remains substantially in situ during inspection of the underlying structural member.

12. The method of any preceding claim, wherein the body has a maximum dimension of less than 300mm.

13. The method of any preceding claim, wherein the cover body is fixed to the protective layer by means of:
frictional welding; thermal welding; bonding; gluing; or strapping.

14. A structural component comprising:
a structural member;
a protective layer for protecting the structural member from corrosion, the protective layer covering at least a portion of the structural member, wherein the protective layer includes a gap, the gap being surrounded by the protective layer; and
a cover assembly mounted over the gap and at least a section of the protective layer adjacent the gap,
wherein:
the cover assembly includes a cover body having an aperture and a closure member arranged to interfit with the aperture;
the closure member may interfit with the aperture for preventing ingress of fluid through the opening to the structural member; and
the closure member may be removed from the aperture for providing access to the structural member via the opening in the protective layer.

15. A method of inspecting a structural member comprising:
providing a structural component defined by claim 14;
removing the interfiling member from the aperture;
inspecting the structural member through the opening; and
replacing the interfiling member.
